(19) Europäisches Patentamt
European Patent Office
Office européen des brevets

(11) **EP 2 616 292 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(21) Anmeldenummer: **11734074.5**

(22) Anmeldetag: **18.07.2011**

(51) Int Cl.:
**B60T 8/17** (2006.01)   **B60T 8/1766** (2006.01)
**B60T 8/1755** (2006.01)

(86) Internationale Anmeldenummer:
**PCT/EP2011/062225**

(87) Internationale Veröffentlichungsnummer:
**WO 2012/034738 (22.03.2012 Gazette 2012/12)**

(54) **VERFAHREN ZUR BREMSMOMENTENREGELUNG IN EINEM ZWEIRADFAHRZEUG BEI SCHRÄGLAGENFAHRT**

METHOD FOR REGULATING BRAKING TORQUE IN A TWO-WHEELED VEHICLE WHEN TRAVELING AT A LEAN ANGLE

PROCÉDÉ POUR LE RÉGLAGE DU COUPLE DE FREINAGE SUR UN VÉHICULE À DEUX ROUES DANS UN DÉPLACEMENT EN POSITION INCLINÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2010 DE 102010040674**
**27.05.2011 DE 102011076640**

(43) Veröffentlichungstag der Anmeldung:
**24.07.2013 Patentblatt 2013/30**

(73) Patentinhaber: **Robert Bosch GmbH**
**70442 Stuttgart (DE)**

(72) Erfinder: **LEMEJDA, Markus**
**71642 Ludwigsburg (DE)**

(56) Entgegenhaltungen:
**WO-A1-2006/077211   DE-A1- 3 839 520**
**DE-A1-102005 028 995   DE-A1-102008 011 575**
**DE-A1-102008 021 523**

EP 2 616 292 B1

**Beschreibung**

Die Erfindung bezieht sich auf ein Verfahren zur Bremsmomentenregelung in einem Zweiradfahrzeug bei Schräglagenfahrt.

Stand der Technik

Wird bei einem Motorrad bei Kurvenfahrt die Radbremseinrichtung am Vorderrad betätigt, so resultiert aus dem Vorderrad-Bremsmoment ein Lenkmoment, welches bestrebt ist, das Motorrad aufzurichten und auf einen größeren Kurvenradius zu zwingen. Die Ursache für das Lenkmoment beim Bremsen in der Kurve am Vorderrad liegt im seitlichen Abstand zwischen dem Reifenaufstandspunkt, welcher den effektiven Mittelpunkt der Reifenaufstandsfläche bezeichnet, und der Hochachse des Vorderrades, wobei der Abstand mit zunehmendem Schräglagenwinkel des Motorrads größer wird. Somit wird auch das beim Bremsen auftretende, ungewollte Lenkmoment immer größer, je größer die Schräglage ist.

Die DE 10 2008 011 575 A1 offenbart ein Verfahren zur Stabilisierung eines einspurigen Kraftfahrzeugs. Um Pendelbewegungen des Zweirads mit Schwingungen um die Motorlängsachse und die Lenkachse zu vermeiden bzw. zu kompensieren und dadurch instabile Fahrzustände auszuschließen, die insbesondere bei höheren Geschwindigkeiten auftreten können, wird zunächst der Rollwinkel bzw. die Rollrate als Maßstab für die Pendelbewegung ermittelt und anschließend durch Regelung des Bremsdrucks eine Stabilisierung des Fahrzeugs durchgeführt. Auch das Antriebsmoment, welches vom Antriebsmotor abgegeben wird, wird einer Regelung unterzogen. Bei einer Integralbremsanlage kann die Bremskraftverteilung zwischen Vorder- und Hinterrad verändert werden.

Die WO 2006/077211 A1 offenbart, mittels Sensoren Beschleunigungsmessungen an mehreren Stellen im Motorrad durchzuführen und darauf aufbauend ein Bremsmoment zu ermitteln und einzustellen, um zum einen das Motorrad abzubremsen und zum andern die Fahrstabilität zu erhalten.

Offenbarung der Erfindung

Der Erfindung liegt die Aufgabe zugrunde, die Fahrsicherheit in Zweiradfahrzeugen bei einem Bremsvorgang während einer Schräglagenfahrt zu verbessern.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann bei Zweiradfahrzeugen, insbesondere Motorrädern eingesetzt werden, um die Fahrsicherheit beim Bremsen bei Schräglagenfahrten, insbesondere bei Kurvenfahrten zu erhöhen. Dies erfolgt durch eine selbsttätige Einstellung der Bremsmomente an den Radbremseinrichtungen am Vorderrad und am Hinterrad.

Der Fahrer gibt über mindestens eine Bremsbetätigungseinrichtung ein Wunsch-Bremsmoment vor, welches im Regelfall über die zugeordnete Bremseinrichtung in ein entsprechendes Radbremsmoment umgesetzt wird. Bei dem erfindungsgemäßen Verfahren kann hiervon in der Weise abgewichen werden, dass zwar die insgesamt erzeugten Radbremsmomente mindestens dem Wunsch-Bremsmoment des Fahrers entsprechen, jedoch selbsttätig eine Verteilung der Radbremsmomente am Vorderrad und Hinterrad so durchgeführt wird, dass ein aus den Radbremsmomenten resultierendes Lenkmoment im Zweiradfahrzeug einen zugeordneten Grenzwert nicht überschreitet. Somit können bei einer ausschließlichen Betätigung der Vorderradbremse ausschließlich oder zusätzlich Radbremsmomente am Hinterrad erzeugt werden. Umgekehrt ist es möglich, bei einer ausschließlichen Betätigung der Hinterradbremse ausschließlich oder zusätzlich Radbremsmomente am Vorderrad zu erzeugen. Außerdem sind gemischte Verfahrensweisen möglich, bei denen der Fahrer sowohl die Vorderradbremse als auch die Hinterradbremse betätigt, jedoch von den entsprechenden Wunschmomenten abgewichen und stattdessen ein Anteil über die jeweils andere Radbremseinrichtung erzeugt wird.

Hintergrund der selbsttätigen Verteilung von Radbremsmomenten am Vorderrad und am Hinterrad sind entgegengesetzte Lenkmomente, die bei einem Bremsvorgang am Vorderrad und einem Bremsvorgang am Hinterrad während einer Schräglagenfahrt entstehen. Derartige Schräglagen treten üblicherweise bei Kurvenfahrt auf, sie können grundsätzlich aber auch bei Geradeausfahrt vom Fahrer provoziert werden. Bei der Schräglage wandert der Reifenaufstandspunkt von der Mitte des Reifenmantels zur Seite hin aus, was im Falle eines Bremsvorgangs zu einem Lenkmoment um die Hochachse des betreffenden Rades führt. Am Vorderrad führt dies zu einem das Zweiradfahrzeug aufrichtenden Moment, am Hinterrad zu einem entgegengerichteten Moment um die Radhochachse des Hinterrades. Diese Radgiermomente führen zu einem Gesamt-Lenkmoment, das je nach Anteil der Radgiermomente am Vorderrad und am Hinterrad insgesamt zu einem aufrichtenden Lenkmoment oder zu einem entgegengesetzt gerichteten Lenkmoment führt. Gegebenenfalls kommt auch eine Kompensation der Momente in Betracht.

Durch Vorgabe eines Lenkmoment-Grenzwertes, welcher von dem Betrag des resultierenden Lenkmoments nicht überschritten werden darf, ist sichergestellt, dass das aufrichtende Lenkmoment bzw. das entgegengesetzt gerichtete Lenkmoment klein genug bleibt, so dass das Fahrverhalten nicht oder zumindest in einer nicht signifikanten Weise beeinflusst wird. Zugleich kann das Fahrerwunschbremsmoment vollständig umgesetzt werden, auch wenn von der vom Fahrer vorgegebenen Bremsbetätigung am Vorderrad bzw. am Hinterrad abgewichen wird.

Bremst beispielsweise während einer Schräglagenfahrt der Fahrer am Vorderrad ab, so führt dies zu einem aufrichtenden Moment. Über die selbsttätige Verteilung des Bremsmomentes mit einem Anteil am Radbremsmoment an dem Hinterrad wird ein kompensierendes, entgegengerichtetes Lenkmoment erzeugt, so dass das Gesamt-Lenkmoment unterhalb des zugeordneten Grenzwertes bleibt.

Gemäß einer zweckmäßigen Weiterbildung ist vorgesehen, dass die Verteilung der Radbremsmomente zwischen Vorderrad und Hinterrad in der Weise durchgeführt wird, dass ein Mindest-Lenkmoment nicht unterschritten wird. Während der Kurvenbremsung in Schräglage muss sich das Motorrad aufrichten, um schließlich im Stillstand eine aufrechte Position einzunehmen. Das hierfür notwendige Mindest-Lenkmoment kann durch eine entsprechende Verteilung der Radbremsmomente erreicht werden. Man erhält somit ein Gesamt-Lenkmoment, welches vorteilhafterweise zwischen einem unteren Grenzwert und einem oberen Grenzwert liegt. Der obere Grenzwert stellt sicher, dass das Zweiradfahrzeug kein zu hohes Lenkmoment erfährt, welches die Fahrstabilität oder zumindest das subjektive Fahrempfinden des Fahrers beeinträchtigt. Der untere Grenzwert gewährleistet ein Mindestlenkmoment, welches ein Aufrichten des Zweiradfahrzeugs beim Abbremsen bis zum Stillstand erleichtert.

Das Verfahren wird vorzugsweise in Zweiradfahrzeugen mit Radbremseinrichtungen angewandt, die als hydraulische Radbremsen ausgeführt sind.

Gemäß einer weiteren zweckmäßigen Ausführung wird für den Fall, dass an einem Fahrzeugrad das geforderte Radbremsmoment nicht in voller Höhe auf die Straße übertragbar ist, beispielsweise aufgrund einer reduzierten Aufstandskraft wie zum Beispiel beim Überfahren einer Kuppe oder aufgrund eines reduzierten Reibverhältnisses, der Aufbaugradient des Radbremsmoments am anderen Fahrzeugrad begrenzt wird. Hierdurch wird dem Fahrer Zeit für eine eigene Reaktion gegeben, um selbst das Zweiradfahrzeug in der Sollspur halten zu können.

Gemäß noch einer weiteren vorteilhaften Ausführung wird das Wunsch-Bremsmoment des Fahrers zeitlich verzögert in ein wirksames Radbremsmoment umgesetzt. Auch hiermit wird dem Fahrer Zeit zu einer eigenen Reaktion gegeben.

In einer weiteren zweckmäßigen Ausführung geht die Summe der Ist-Radbremsmomente über das Wunsch-Bremsmoment des Fahrers hinaus, soweit die Umsetzung der stärkeren Verzögerung grundsätzlich machbar ist und die erhöhten Radbremsmomente auf die Fahrbahn übertragbar sind. Eine derartige, verstärkte Verzögerung kann gegebenenfalls durch ein Fahrerassistenzsystem ausgelöst werden, beispielsweise durch einen sogenannten Bremsassistenten. Die Verzögerung wird in diesem Fall so durchgeführt, dass das aus den Radbremsmomenten resultierende Lenkmoment den zugeordneten Grenzwert nicht überschreitet. Somit gilt auch im Falle einer Bremsmomentverstärkung die das Lenkmoment betreffende Randbedingung. Das zusätzliche Radbremsmoment wird hierbei zweckmäßigerweise in Abhängigkeit aktueller Fahrzustandsgrößen eingestellt, beispielsweise als Funktion der Fahrzeuggeschwindigkeit und/oder des Schräglagenwinkels. Auch das Radbremsmoment desjenigen Fahrzeugrades kann berücksichtigt werden, das nicht mit dem zusätzlichen Moment beaufschlagt wird.

Zur Ermittlung der Radgiermomente am Vorderrad bzw. am Hinterrad, welche für das Lenkmoment verantwortlich sind, wird der seitliche Abstand des Reifenaufstandspunktes zur jeweiligen Radhochachse und die jeweilige Radbremskraft ermittelt, wobei der seitliche Abstand als Funktion des Schräglagenwinkels bestimmt wird, da mit zunehmendem Schräglagenwinkel auch der Abstand größer wird. Die Radbremskraft an einem Fahrzeugrad wird aus dem jeweiligen Radbremsmoment bestimmt, wobei im Falle hydraulischer Radbremsen die Radbremskräfte in einer ersten Näherung linear von den Bremsdrücken abhängen.

Mit Kenntnis der Radgiermomente kann das Gesamt-Lenkmoment unter Berücksichtigung von Geometriefaktoren ermittelt werden, über die geometrische Gegebenheiten im Zweiradfahrzeug berücksichtigt werden können, beispielsweise ein von der Hochachse abweichender Lenkkopfwinkel. Die Geometriefaktoren werden mit den jeweiligen Radgiermomenten multipliziert, wobei sich das Gesamt-Lenkmoment aus der Differenz von über den Geometriefaktor gewichtetem Radgiermoment am Vorderrad und über den zugeordneten Geometriefaktor gewichtetem Radgiermoment am Hinterrad ergibt. Dieses Gesamt-Lenkmoment darf den Lenkmoment-Grenzwert nicht überschreiten, wofür die Radbremsmomente am Vorder- und Hinterrad entsprechend verteilt werden.

Zur Ermittlung des Schräglagenwinkels ist zweckmäßigerweise ein Schräglagensensor im Zweiradfahrzeug vorgesehen, welcher den Schräglagenwinkel misst. Im Falle hydraulischer Radbremsen sind zweckmäßigerweise auch Drucksensoren an der Vorderradbremse und der Hinterradbremse angeordnet, über die die jeweiligen Bremsdrücke gemessen werden können. Aus den Bremsdrücken können die Radbremskräfte ermittelt werden.

Das erfindungsgemäße Verfahren läuft in einem Regel- bzw. Steuergerät ab, welches Bestandteil des Bremssystems in einem Zweiradfahrzeug ist oder mit einem derartigen Bremssystem kommuniziert.

Weitere Vorteile und zweckmäßige Ausführungen sind den weiteren Ansprüchen, der Figurenbeschreibung und den Zeichnungen zu entnehmen. Es zeigen:

Fig. 1     in schematischer Darstellung ein Motorrad,

Fig. 2    eine Darstellung eines Rades in Schräglage,

Fig. 3    ein Ablaufdiagramm zur Durchführung des Verfahrens zur Bremsmomentenregelung in einem Motorrad bei Schräglagenfahrt.

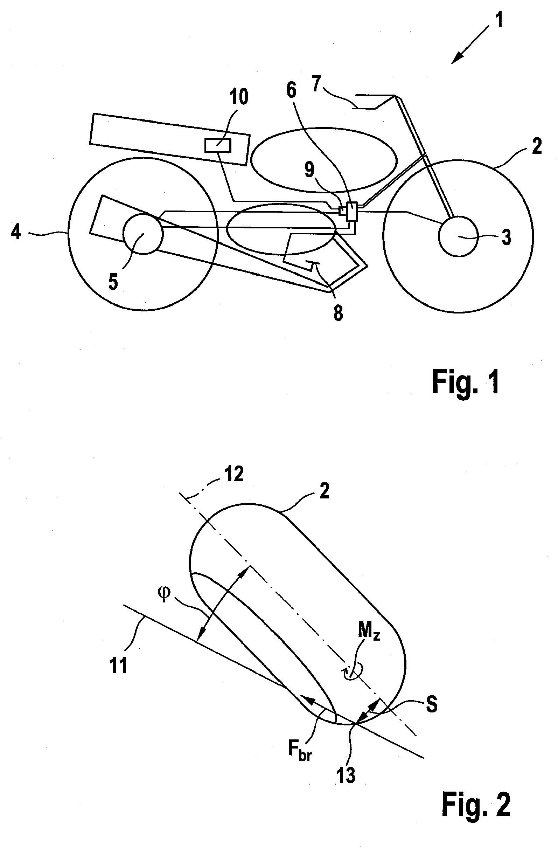

Wie Fig. 1 zu entnehmen, weist das Motorrad 1 am Vorderrad 2 eine Vorderradbremse 3 und am Hinterrad 4 eine Hinterradbremse 5 auf, wobei die Vorderradbremse 3 und die Hinterradbremse 5 jeweils als hydraulische Bremseinrichtungen ausgeführt sind und über eine Bremshydraulikeinheit 6 mit Hydraulikfluid versorgt werden. Der Fahrer kann seinen Bremswunsch für die Vorderradbremse 3 über einen am Lenkrad angeordneten Bremshebel 7 und für die Hinterradbremse 5 über einen weiteren, mit dem Fuß zu betätigenden Bremshebel 8 vorgeben. Das Einstellen der Radbremsmomente erfolgt über Stellsignale eines Regel- bzw. Steuergerätes 9, dem die Informationen über die Betätigungen der Bremshebel 7 und 8 zugehen und dem darüber hinaus Sensorsignale, insbesondere zum hydraulischen Bremsdruck zugeführt werden. Im Motorrad 1 ist außerdem ein Schräglagensensor 10 angeordnet, über den die Schräglage des Motorrads gegenüber der Fahrbahn oder gegebenenfalls auch bezogen auf die Erdgravitation ermittelt werden kann. Der Schräglagenwinkel $\varphi$ wird ebenfalls als Eingangssignal dem Regel- bzw. Steuergerät 9 zugeführt.

In Fig. 2 sind die geometrischen Verhältnisse sowie Kräfte und Momente an einem Fahrzeugrad 2 in Schräglagenfahrt bei gleichzeitigem Bremsen dargestellt. Die Radhochachse ist mit 12 bezeichnet, die Schräglage ist durch den Schräglagenwinkel $\varphi$ gekennzeichnet, welcher die seitliche Auslenkung des Rades 2 aus der aufrechten Position bezogen auf die Fahrbahn 11 kennzeichnet. Bei einer Schräglage mit dem Schräglagenwinkel $\varphi$ wandert der Radaufstandspunkt 13, der den effektiven Mittelpunkt der Reifenaufstandsfläche kennzeichnet, von der Mitte des Reifenmantels zur Seite hin aus. Dementsprechend weist der Radaufstandspunkt 13 einen seitlichen Abstand s zur Radhochachse 12 auf, welche durch die Mitte des Rades 2 geführt ist. Der seitliche Abstand s ist hierbei eine Funktion des Schräglagenwinkels $\varphi$.

Beim Bremsen wird auf das Rad 2 ein Bremsmoment ausgeübt, welches zu einer Bremskraft $F_{br}$ im Radaufstandspunkt 13 führt. Aufgrund des seitlichen Abstandes s zur Mitte des Rades 2 entsteht hierdurch ein Radgiermoment $M_z$ um die Hochachse 12 des Rades.

Der Schräglagenwinkel $\varphi$ wird durch Messung bestimmt, der seitliche Abstand s kann als Funktion des Schräglagenwinkels $\varphi$ ermittelt werden. Die Bremskraft $F_{br}$ kann aus dem bekannten Bremsdruck in der Radbremse geleitet werden, beispielsweise in erster Näherung aus einem linearen Abhängigkeitsverhältnis. Mit diesen Informationen ist es möglich, jeweils für das Vorderrad und für das Hinterrad die Radgiermomente $M_{z,front}$, $M_{z,rear}$ gemäß folgenden Beziehungen zu ermitteln:

$$M_{z,front} = s_{front}(\varphi) \cdot F_{br,front}$$

$$M_{z,rear} = s_{rear}(\varphi) \cdot F_{br,rear}$$

Hierin ist mit dem Index "front" das Vorderrad und mit dem Index "rear" das Hinterrad bezeichnet.

Bei Kenntnis der Radgiermomente kann unter weiterer Berücksichtigung von Geometriefaktoren $\gamma_{front}$ und $\gamma_{rear}$, durch welche beispielsweise ein von der Radhochachse abweichender Lenkkopfwinkel berücksichtigt wird, ein Gesamt-Lenkmoment $M_{steer}$ gemäß der Beziehung

$$M_{steer} = \gamma_{front} \cdot M_{z,front} - \gamma_{rear} \cdot M_{z,rear}$$

berechnet werden. Die Radgiermomente $M_{z,front}$, $M_{z,rear}$ am Vorderrad und am Hinterrad wirken beim Aufbringen einer Bremskraft in entgegengesetzte Richtungen, so dass sich das Gesamt-Lenkmoment $M_{steer}$ aus der Differenz der gewichteten Radgiermomente am Vorderrad und am Hinterrad berechnet.

Bei dem Verfahren zur Bremsmomentenregelung soll der Betrag des Gesamt-Lenkmoments $M_{steer}$ einen Grenzwert $M_{steer,lim}$ unterschreiten:

$$\left| M_{steer} \right| < M_{steer,lim}$$

Damit soll eine hohe Fahrstabilität sichergestellt werden. Um dies zu erreichen, wird das Wunsch-Bremsmoment $M_{br,des}$, welches der Fahrer über die Bremshebel vorgibt, selbsttätig so zwischen der Vorderradbremse und der Hinterradbremse verteilt, dass die vorgenannte Bedingung erfüllt ist.

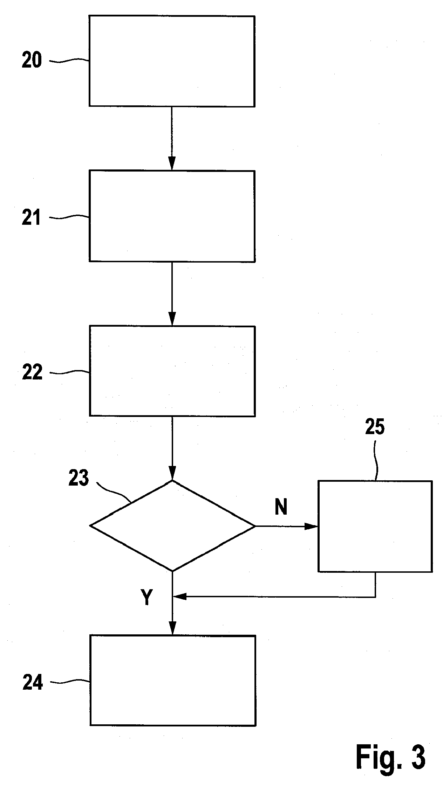

In Fig. 3 ist in vereinfachter, schematischer Darstellung ein Ablaufdiagramm zur Durchführung des Verfahrens zur Bremsmomentenregelung gezeigt. In einem ersten Verfahrensschritt 20 werden die Wunsch-Bremsmomente $M_{br,front,des}$ am Vorderrad und $M_{br,rear,des}$ am Hinterrad, welches vom Fahrer vorgegeben werden, ermittelt. Dies kann über den erzeugten hydraulischen Druck erfolgen, der bei Betätigung der Radbremshebel entsteht.

Im nächsten Verfahrensschritt 21 wird der Schräglagenwinkel $\varphi$ durch Messen mithilfe des Schräglagenwinkelsensors ermittelt. Danach erfolgt im Schritt 22 die Berechnung der Radgiermomente $M_{z,front}$ um die Hochachse des Vorderrades und $M_{z,rear}$ um die Hochachse des Hinterrades, woraus, wie oben dargestellt, das Gesamt-Lenkmoment $M_{steer}$ berechnet werden kann.

Im Verfahrensschritt 23 erfolgt eine Abfrage, ob der Betrag des Gesamt-Lenkmoments $M_{steer}$ den zugeordneten Lenkmoment-Grenzwert $M_{steer,lim}$ unterschreitet. Sofern dies der Fall ist, wird der Ja-Verzweigung ("Y") folgend zum nächsten Verfahrensschritt 24 fortgefahren und es werden die Radbremsen am Vorderrad und am Hinterrad dem Fahrerwunsch entsprechend betätigt. Ist dies dagegen nicht der Fall, wird der Nein-Verzweigung ("N") folgend zum Verfahrensschritt 25 fortgefahren, in welchem selbsttätig bzw. fahrerunabhängig eine Aufteilung der Radbremsmomente in der Weise erfolgt, dass die Bedingung aus dem Verfahrensschritt 23 erfüllt ist, wonach das Gesamt-Lenkmoment den zugeordneten Grenzwert unterschreiten muss. Das Wunsch-Bremsmoment des Fahrers, welches sich aus der Summe der einzelnen Wunsch-Bremsmomente für die Vorderradbremse und die Hinterradbremse ergibt, soll als Randbedingung auch nach einer Neuverteilung der Radbremsmomente zwischen Vorder- und Hinterradbremse erhalten bleiben.

Nach der Ermittlung der neuen Verteilung der Radbremsmomente wird zum Verfahrensschritt 24 fortgefahren, in welchem die Radbremsen mit den ermittelten Bremsmomenten beaufschlagt werden.

## Patentansprüche

1. Verfahren zur Bremsmomentenregelung in einem Zweiradfahrzeug bei einer Fahrt mit Schräglage, bei dem der Fahrer ein Wunsch-Bremsmoment ($M_{br,front,dess}$, $M_{br,rear,des}$) vorgibt, das in der Weise in Radbremsmomente ($M_{br,fronb}$ $M_{br,rear}$) am Vorderrad bzw. am Hinterrad verteilt wird, dass ein aus den Radbremsmomenten ($M_{br,front}$, $M_{br,rear}$) resultierendes Lenkmoment ($M_{steer}$) im Zweiradfahrzeug einen oberen Lenkmoment-Grenzwert ($M_{steer,lim}$) unterschreitet und ein Mindest-Lenkmoment ($M_{steer,min}$) nicht unterschritten wird.

2. Verfahren nach Anspruch 1, **dadurch gekennzeichnet, dass** für den Fall, dass an einem Fahrzeugrad das geforderte Radbremsmoment ($M_{br,front}$, $M_{br,rear}$) nicht in voller Höhe auf die Straße übertragbar ist, der Aufbaugradient des Radbremsmoments ($M_{br,front}$, $M_{br,rear}$) am anderen Fahrzeugrad begrenzt wird.

3. Verfahren nach einem der Ansprüche 1 bis 2, **dadurch gekennzeichnet, dass** das Wunsch-Bremsmoment ($M_{br,front,dess}$ $M_{br,rear,des}$) des Fahrers zeitlich verzögert in ein wirksames Radbremsmoment ($M_{br,front}$, $M_{br,rear}$) umgesetzt wird.

4. Verfahren nach einem der Ansprüche 1 bis 3, **dadurch gekennzeichnet, dass** eine über das Wunsch-Bremsmoment ($M_{br,front,des}$, $M_{br,rear,des}$) des Fahrers hinausgehende Verzögerung durch Erzeugen eines zusätzlichen Radbremsmoments durchgeführt wird, wobei die Verzögerung in der Weise durchgeführt wird, dass das aus den Radbremsmomenten ($M_{br,front}$, $M_{br,rear}$) resultierende Lenkmoment ($M_{steer}$) den Lenkmoment-Grenzwert ($M_{steer,lim}$) unterschreitet.

5. Verfahren nach Anspruch 4, **dadurch gekennzeichnet, dass** das zusätzliche Radbremsmoment ($M_{br,front}$, $M_{br,rear}$) in Abhängigkeit von aktuellen Fahrzustandsgrößen ($v_x$, $\varphi$) eingestellt wird, insbesondere in Abhängigkeit der Fahrzeuggeschwindigkeit ($v_x$) und/oder des Schräglagenwinkels ($\varphi$) und/oder in Abhängigkeit des Radbremsmoments ($M_{br,front}$, $M_{br,rear}$) am anderen Fahrzeugrad.

6. Verfahren nach einem der Ansprüche 1 bis 5, **dadurch gekennzeichnet, dass** die Radgiermomente ($M_{z,front}$, $M_{z,rear}$) am Vorderrad bzw. am Hinterrad aus dem seitlichen Abstand ($s_{front}$, $s_{rear}$) des Reifenaufstandspunktes zur Radhochachse und der Radbremskraft ($F_{br,front}$, $F_{br,rear}$) ermittelt wird:

$$M_{z,front} = s_{front}(\varphi) \cdot F_{br,front}$$

$$M_{z,rear} = s_{rear}(\varphi) \cdot F_{br,rear}$$

**7.** Verfahren nach Anspruch 6, **dadurch gekennzeichnet, dass** der seitliche Abstand (s) als Funktion des Schräglagenwinkels ($\varphi$) bestimmt wird.

**8.** Verfahren nach Anspruch 6 oder 7, **dadurch gekennzeichnet, dass** die Radbremskraft ($F_{br,front}$, $F_{br,rear}$) aus dem Bremsdruck einer hydraulischen Radbremseinrichtung ermittelt wird.

**9.** Verfahren nach einem der Ansprüche 6 bis 8, **dadurch gekennzeichnet, dass** das Lenkmoment ($M_{steer}$) aus den Radgiermomenten ($M_{z\cdot front}$, $M_{z,rear}$) unter Berücksichtigung von Geometriefaktoren ($Y_{front}$, $Y_{rear}$) ermittelt wird:

$$M_{steer} = \gamma_{front} \cdot M_{z,front} - \gamma_{rear} \cdot M_{z,rear}$$

**10.** Verfahren nach einem der Ansprüche 1 bis 9, **dadurch gekennzeichnet, dass** der Schräglagenwinkel ($\varphi$) gemessen wird.

**11.** Regel- bzw. Steuergerät, das ein Verfahren nach einem der Ansprüche 1 bis 10 ausführt.

**12.** Bremssystem in einem Zweiradfahrzeug mit einem Regel- bzw. Steuergerät nach Anspruch 11.

## Claims

**1.** Method for regulating braking torque of a two-wheeled vehicle when banking, in which the driver predetermines a desired braking torque ($M_{br,front,des}$, $M_{br,rear,des}$) which is distributed in wheel-braking torques ($M_{br,front}$, $M_{br,rear}$) at the front wheel or at the rear wheel in such a way that a steering torque ($M_{steer}$) of the two-wheeled vehicle resulting from the wheel-braking torques ($M_{br,front}$, $M_{br,rear}$) drops below an upper steering torque limit ($M_{steer,lim}$) and a minimum steering torque ($M_{steer,min}$) is not undershot.

**2.** Method according to Claim 1, **characterized in that**, in the case where the required wheel braking torque ($M_{br,front}$, $M_{br,rear}$) cannot be transferred onto the road in the entirety thereof at one vehicle wheel, the wheel-braking torque build-up gradient ($M_{br,front}$, $M_{br,rear}$) at the other vehicle wheel is restricted.

**3.** Method according to either of Claims 1 and 2, **characterized in that** the desired braking torque ($M_{br,front,des}$, $M_{br,rear,des}$) of the driver is converted with time delay into an effective wheel-braking torque ($M_{br,front}$, $M_{br,rear}$).

**4.** Method according to one of Claims 1 to 3, **characterized in that** a delay going beyond the desired braking torque ($M_{br,front,des}$, $M_{br,rear,des}$) of the driver is carried out by generating an additional wheel-braking torque, wherein the delay is carried out in such a way that the steering torque ($M_{steer}$), resulting from the wheel-braking torques ($M_{br,front}$, $M_{br,rear}$), drops below the steering torque limit ($M_{steer,lim}$).

**5.** Method according to Claim 4, **characterized in that** the additional wheel-braking torque ($M_{br,front}$, $M_{br,rear}$) is adjusted in a manner dependent on current vehicle state variables ($v_x$, $\varphi$), in particular in a manner dependent on vehicle speed ($v_x$) and/or the banking angle ($\varphi$), and/or in a manner dependent on the wheel-braking torque ($M_{br,front}$, $M_{br,rear}$) at the other vehicle wheel.

**6.** Method according to one of Claims 1 to 5, **characterized in that** the wheel yaw torques ($M_{z,front}$, $M_{z,rear}$) at the front wheel or at the rear wheel are established from the lateral distance ($s_{front}$, $s_{rear}$) of the wheel contact point in relation to the vertical wheel axis and the wheel braking force ($F_{br,front}$, $F_{br,rear}$) :

$$M_{z,front} = s_{front}(\varphi) \cdot F_{br,front}$$

$$M_{z,rear} = s_{rear}(\varphi) \cdot F_{br,rear}.$$

**7.** Method according to Claim 6, **characterized in that** the lateral distance (s) is determined as a function of the banking angle ($\varphi$).

8. Method according to Claim 6 or 7, **characterized in that** the wheel braking force ($F_{br,front}$, $F_{br,rear}$) is established from the braking pressure of a hydraulic wheel-braking device.

9. Method according to one of Claims 6 to 8, **characterized in that** the steering torque ($M_{steer}$) is established from the wheel yaw torques ($M_{z,front}$, $M_{z,rear}$) taking into account geometry factors ($\gamma_{front}$, $\gamma_{rear}$) :

$$M_{steer} = \gamma_{front} \cdot M_{z,front} - \gamma_{rear} \cdot M_{z,rear}.$$

10. Method according to one of Claims 1 to 9, **characterized in that** the banking angle ($\varphi$) is measured.

11. Open-loop or closed-loop control apparatus, which carries out a method according to one of Claims 1 to 10.

12. Braking system in a two-wheeled vehicle comprising an open-loop or closed-loop control apparatus according to Claim 11.


**Revendications**

1. Procédé de régulation de moment de freinage dans un véhicule à deux roues lors d'un déplacement avec position inclinée, selon lequel le conducteur prédéfinit un moment de freinage souhaité ($M_{br,front,des}$, $M_{br,rear,des}$) qui est distribué en moments de freinage de roue ($M_{br,front}$, $M_{br,rear}$) au niveau de la roue avant ou de la roue arrière de telle sorte qu'un couple de direction ($M_{steer}$) résultant du moment de freinage de roue ($M_{br,front}$, $M_{br,rear}$) dans le véhicule à deux roues devient inférieur à une valeur limite supérieure de couple de direction ($M_{steer,lim}$) et ne devient pas inférieur à un couple de direction minimum ($M_{steer, min}$).

2. Procédé selon la revendication 1, **caractérisé en ce que** dans le cas où le moment de freinage de roue ($M_{br,front}$, $M_{br,rear}$) exigé sur une roue de véhicule ne peut être pleinement transféré à la route, le gradient d'établissement du moment de freinage de roue ($M_{br,front}$, $M_{br,rear}$) à l'autre roue de véhicule est limité.

3. Procédé selon l'une des revendications 1 à 2, **caractérisé en ce que** le moment de freinage souhaité ($M_{br,front,des}$, $M_{br,rear,des}$) du conducteur est converti avec un certain retard en un moment de freinage de roue ($M_{br,front}$, $M_{br,rear}$) efficace.

4. Procédé selon l'une des revendications 1 à 3, **caractérisé en ce qu'**un ralentissement allant au-delà du moment de freinage souhaité ($M_{br,front,des}$, $M_{br,rear,des}$) du conducteur est effectué en générant un moment de freinage de roue supplémentaire, le ralentissement étant effectué de telle sorte que le couple de direction ($M_{steer}$) résultant des moments de freinage de roue ($M_{br,front}$, $M_{br,rear}$) est inférieur à la valeur limite de couple de direction ($M_{steer,lim}$).

5. Procédé selon la revendication 4, **caractérisé en ce que** le moment de freinage de roue ($M_{br,front}$, $M_{br,rear}$) supplémentaire est réglé en fonction de grandeurs d'état de conduite ($v_x$, $\varphi$) actuelles, notamment en fonction de la vitesse du véhicule ($v_x$) et/ou de l'angle d'inclinaison ($\varphi$) et/ou en fonction du moment de freinage de roue ($M_{br,front}$, $M_{br,rear}$) au niveau de l'autre roue de véhicule.

6. Procédé selon l'une des revendications 1 à 5, **caractérisé en ce que** les moments de lacet de roue ($M_{z,front}$, $M_{z,rear}$) au niveau de la roue avant ou de la roue arrière sont déterminés à partir de l'écart latéral ($S_{front}$, Srear) entre le point de contact du pneu et l'axe de hauteur de la roue et de la force de freinage de roue ($F_{br,front}$, $F_{br,rear}$) :

$$M_{z,front} = S_{front}(\varphi) \; \star \; F_{br,front}$$

$$M_{z,rear} = S_{rear}(\varphi) \; \star \; F_{br,rear}.$$

7. Procédé selon la revendication 6, **caractérisé en ce que** l'écart latéral ($S$) est déterminé en fonction de l'angle d'inclinaison ($\varphi$).

**8.** Procédé selon la revendication 6 ou 7, **caractérisé en ce que** la force de freinage de roue ($F_{br,front}$, $F_{br,rear}$) est déterminée à partir de la pression de freinage d'un dispositif de freinage de roue hydraulique.

**9.** Procédé selon l'une des revendications 6 à 8, **caractérisé en ce que** le couple de direction ($M_{steer}$) est déterminé à partir des moments de lacet de roue ($M_{z,front}$, $M_{z,rear}$) en tenant compte de facteurs de géométrie ($\gamma_{front}$, $\gamma_{rear}$) :

$$M_{steer} = \gamma_{front} * M_{z,front} - \gamma_{rear} * M_{z,rear}.$$

**10.** Procédé selon l'une des revendications 1 à 9, **caractérisé en ce que** l'angle d'inclinaison ($\varphi$) est mesuré.

**11.** Régulateur ou contrôleur qui met en oeuvre un procédé selon l'une des revendications 1 à 10.

**12.** Système de freinage dans un véhicule à deux roues, comprenant un régulateur ou un contrôleur selon. la revendication 11.

**Fig. 1**

**Fig. 2**

**20**

**21**

**22**

**23** **25**

N

Y

**24**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008011575 A1
- WO 2006077211 A1